# EUROPEAN PATENT APPLICATION

(11) **EP 4 510 461 A1**
(43) Date of publication of application: **19.02.2025**
(21) Application number: 23787736.0
(22) Date of filing: 12.04.2023
(51) Int. Cl.: H04B 7/0408

(54) **MODEL VALIDITY DETERMINATION METHOD AND APPARATUS, AND COMMUNICATION DEVICE**

(30) Priority: 13.04.2022 CN 202210384902
(71) Applicant: Vivo Mobile Communication Co., Ltd., Dongguan, Guangdong 523863 (CN)
(72) Inventor: SHI, Yuan, Dongguan, Guangdong 523863 (CN)
(74) Representative: Murgitroyd & Company
(86) International application number: PCT/CN2023/087736
(87) International publication number: WO 2023/198093

(57) **Abstract**

This application discloses a model validity determination method and apparatus, and a communication device, belonging to the technical field of communications. The model validity determination method in embodiments of this application includes: obtaining, by a first communication device, at least one beam group, where each beam group includes at least one beam; respectively inputting, by the first communication device, first beam related information corresponding to the at least one beam group into a target AI model so as to obtain at least one piece of second beam related information by prediction, where second beam related information corresponds to the beam group; and performing performance verification, by the first communication device, on the target AI model according to the at least one piece of second beam related information, or transmitting, by the first communication device, the at least one piece of second beam related information to a second communication device, where the at least one piece of second beam related information is used for the second communication device to perform performance verification on the target AI model.

## Description

### CROSS-REFERENCE TO RELATED APPLICATION

The present disclosure claims the priority of Chinese patent application No. 202210384902.4, titled "Model Validity Determination Method and Apparatus, and Communication Device", filed with China National Intellectual Property Administration on April 13, 2022, the entire contents of which are incorporated herein by reference.

### TECHNICAL FIELD

This application belongs to the technical field of communications, and specifically relates to a model validity determination method and apparatus, and a communication device.

### BACKGROUND

With the rapid development of artificial intelligence (artificial intelligence, AI), it has been widely applied in various fields. For example, in the field of communications, an AI module (such as an AI model) can be deployed on a terminal side or network side for beam information prediction, channel quality prediction, etc.

During the use of the AI model, the validity verification of the AI model can be used for avoiding the occurrence of invalidation of the AI model caused by changes in internal and external factors. However, during the validity verification of the AI model, there is still a problem of low accuracy in the validity verification result of the AI model.

### SUMMARY

Embodiments of this application provide a model validity determination method and apparatus, and a communication device, which can achieve the validity verification of an AI model and simultaneously ensure the accuracy of the validity verification result of the AI model.

According to a first aspect, a model validity determination method is provided, including: obtaining, by a first communication device, at least one beam group, where each beam group includes at least one beam; respectively inputting, by the first communication device, first beam related information corresponding to the at least one beam group into a target AI model so as to obtain at least one piece of second beam related information by means of prediction, where the second beam related information corresponds to the beam group; and performing performance verification, by the first communication device, on the target AI model according to the at least one piece of second beam related information, or transmitting, by the first communication device, the at least one piece of second beam related information to a second communication device, where the at least one piece of second beam related information is used for the second communication device to perform performance verification on the target AI model.

According to a second aspect, a model validity determination method is provided, including any one of the following: receiving, by a second communication device, at least one piece of second beam related information transmitted by a first communication device, and performing performance verification on a target AI model according to the at least one piece of second beam related information; and receiving, by the second communication device, second indication information transmitted by the first communication device, where the second indication information is used for indicating whether the target AI model is valid or invalid.

According to a third aspect, a model validity determination apparatus is provided, including: an obtaining module, configured to obtain at least one beam group, where each beam group includes at least one beam; a prediction module, configured to respectively input first beam related information corresponding to the at least one beam group into a target AI model so as to obtain at least one piece of second beam related information by means of prediction, where the second beam related information corresponds to the beam group; and a verification module, configured to perform performance verification on the target AI model according to the at least one piece of second beam related information, or a transmitting module, configured to transmit the at least one piece of second beam related information to a second communication device, where the at least one piece of second beam related information is used for the second communication device to perform performance verification on the target AI model.

According to a fourth aspect, a model validity determination apparatus is provided, including a receiving module, configured to perform any one of the following: receiving at least one piece of second beam related information transmitted by a first communication device, and performing performance verification on a target AI model according to the at least one piece of second beam related information; and receiving second indication information transmitted by the first communication device, where the second indication information is used for indicating whether the target AI model is valid or invalid.

According to a fifth aspect, a communication device is provided. The communication device includes a processor and a memory. The memory stores programs or instructions executable on the processor. When the programs or instructions are executed by the processor, steps of the method according to the first aspect or the second aspect are implemented.

According to a sixth aspect, a communication device is provided, including a processor and a communication interface, where the communication interface is coupled to the processor, and the processor is configured to run programs or instructions to implement steps of the method according to the first aspect, or implement steps of the method according to the second aspect.

According to a seventh aspect, a communication system is provided, including: a first communication device and a second communication device. The first communication device may be configured to execute steps of the method according to the first aspect, and the second communication device may be configured to execute steps of the method according to the second aspect.

According to an eighth aspect, a readable storage medium is provided. The readable storage medium stores programs or instructions. When the programs or instructions are executed by a processor, steps of the method according to the first aspect are implemented, or steps of the method according to the second aspect are implemented.

According to a ninth aspect, a chip is provided. The chip includes a processor and a communication interface. The communication interface is coupled to the processor. The processor is configured to run programs or instructions to implement steps of the method according to the first aspect, or implement steps of the method according to the second aspect.

According to a tenth aspect, a computer program product/program product is provided. The computer program product/program product is stored in a storage medium. The computer program/program product is executed by at least one processor to implement steps of the method according to the first aspect, or implement steps of the method according to the second aspect.

In the embodiments of this application, at least one beam group is obtained, and the first beam related information corresponding to the at least one beam group is used as the input to the target AI model so as to obtain at least one piece of second beam related information by means of prediction, thereby performing verification of the performance of the target AI model according to the at least one piece of second beam related information. Therefore, on the one hand, the verification of the validity of the target AI model can be achieved. On the other hand, in the embodiments, at least one different beam group is used for performing performance verification on the target AI model, thereby avoiding the problem of different model performance verification results caused by different beam groups, and improving the accuracy of model performance verification results.

### BRIEF DESCRIPTION OF THE DRAWINGS

FIG. 1 is a schematic structural diagram of a wireless communication system provided in an exemplary embodiment of this application.
FIG. 2 is a schematic flowchart of a model validity determination method provided in an exemplary embodiment of this application.
FIG. 3 is a schematic flowchart of a model validity determination method provided in another exemplary embodiment of this application.
FIG. 4 is a schematic flowchart of a model validity determination method provided in yet another exemplary embodiment of this application.
FIG. 5 is a schematic structural diagram of a model validity determination apparatus provided in an exemplary embodiment of this application.
FIG. 6 is a schematic structural diagram of a model validity determination apparatus provided in another exemplary embodiment of this application.
FIG. 7 is a schematic structural diagram of a communication device provided in an exemplary embodiment of this application.
FIG. 8 is a schematic structural diagram of a terminal provided in an exemplary embodiment of this application.
FIG. 9 is a schematic structural diagram of a network side device provided in an exemplary embodiment of this application.

### DETAILED DESCRIPTION

The technical solutions in the embodiments of this application are clearly described below with reference to the accompanying drawings in the embodiments of this application. Apparently, the described embodiments are merely some rather than all of the embodiments of this application. All other embodiments obtained by those of ordinary skill in the art based on the embodiments of this application fall within the protection scope of this application.

In the specification and claims of this application, the terms such as "first" and "second" are used for distinguishing similar objects, rather than describing a specific order or sequence. It is to be understood that the terms used in such a way are exchangeable in a proper case, so that the embodiments of this application can be implemented in an order different from those shown or described here. Moreover, the objects distinguished by "first" and "second" are usually of the same category, and the number of the objects is not limited, for example, there may be one or more first objects. In addition, in the specification and claims, "and/or" indicates at least one of the connected objects, and the character "/" generally indicates that the associated objects before and after it are in an "or" relationship.

It is worth noting that the technology described in the embodiments of this application is not limited to long term evolution (Long Term Evolution, LTE)/LTE-advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often interchangeably used, and the described technology can be applied to the above systems and radio technologies, and can also be applied to other systems and radio technologies. The following describes a new radio (New Radio, NR) system as an example, and the NR term is used in most of the following descriptions. However, these technologies can also be applied to applications other than the NR system, e.g., the 6^{th} generation (6^{th} Generation, 6G) communication system.

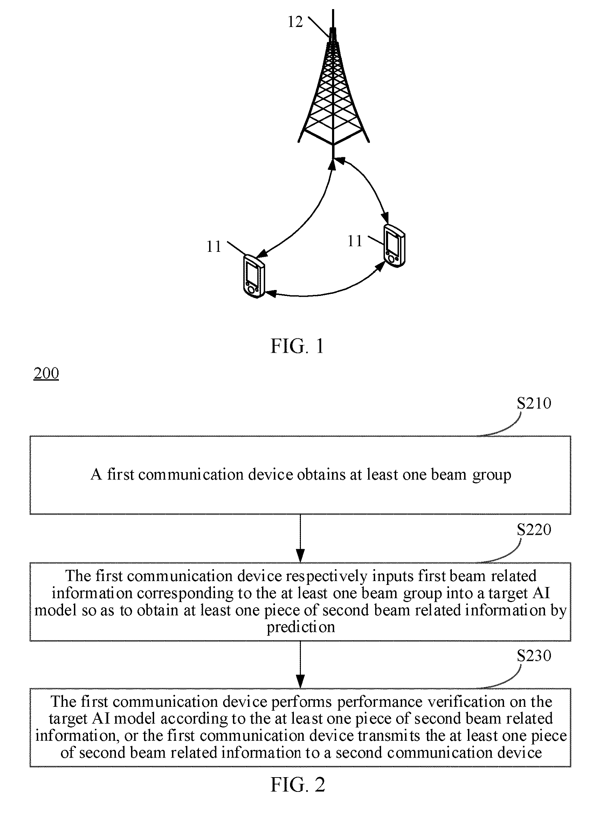

FIG. 1 shows a block diagram of a wireless communication system that can be applied in an embodiment of this application. The wireless communication system includes a terminal 11 and a network side device 12. The terminal 11 may be a mobile phone, a tablet personal computer (Tablet Personal Computer), a laptop computer (Laptop Computer) or also known as a notebook computer, a personal digital assistant (Personal Digital Assistant, PDA), a handheld computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart appliance (a home device with a wireless communication function, such as a refrigerator, a television, a washing machine, or furniture), a game console, a personal computer (personal computer, PC), a teller machine, a self-service machine, or other terminal side devices. Wearable devices include: smart watches, smart wristbands, smart earphones, smart glasses, smart jewelry (smart wristlets, smart bracelets, smart rings, smart necklaces, smart leglets, smart anklets, etc.), smart wrist straps and smart clothing. It should be noted that the specific type of the terminal 11 is not limited in the embodiment of this application. The network side device 12 may include an access network device or a core network device, where the access network device 12 may also be referred to as a radio access network device, a radio access network (Radio Access Network, RAN), a radio access network function, or a radio access network unit. The access network device 12 may include a base station, a wireless local area network (Wireless Local Area Network, WLAN) access point, or a wireless fidelity (Wireless Fidelity, WiFi) node. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a home Node B, a home evolved Node B, a transmitting receiving point (Transmitting Receiving Point, TRP) or some other suitable terms in the field. As long as the same technical effects are achieved, the base station is not limited to specific technical terms. It should be noted that in the embodiment of this application, a base station in an NR system is taken only as an example for introduction, but the specific type of the base station is not limited.

The technical solutions provided in the embodiments of this application are described in detail below through some embodiments and application scenarios thereof with reference to the accompanying drawings.

FIG. 2 shows a schematic flowchart of a model validity determination method 200 provided in an exemplary embodiment of this application. The method 200 may be executed by, but is not limited to be executed by, the first communication device, and specifically may be executed by hardware and/or software installed in the first communication device. In this embodiment, the method 200 at least may include the following steps.

S210: The first communication device obtains at least one beam group.

The first communication device and the subsequently mentioned second communication device may be network side devices such as base stations, and may also be terminals or auxiliary network center units, etc. The auxiliary network center unit is a unit for information interaction.

Based on this, in this embodiment, each beam group obtained by the first communication device may include at least one beam. For example, assuming that there are a total of 32 beams and each beam has an identifier (Identifier, ID) ranging from 1 to 32, the first communication device may select beams with beam IDs 1, 2, 3 and 4 as a beam group 1, beams with beam IDs 4, 3, 2 and 1 as a beam group 2, beams with beam IDs 1, 4, 6 and 9 as a beam group 3, beams with beam IDs 1, 9, 18 and 30 as a beam group 4, etc. Of course, the first communication device may arbitrarily obtain or select the beam group, or may obtain the beam group according to a pre-agreed or configured beam group obtaining mode, which is not limited here.

It is worth noting that the beam group may be a transmitting beam of a transmitting end, a receiving beam of a receiving end, a transmitting beam expected by the transmitting end, a transmitting beam expected by the receiving end, a receiving beam expected by the receiving end, a transmitting beam expected by the receiving end, etc. The transmitting end may be the first communication device, and the receiving end may be the second communication device, etc. In addition, the beam group may also be referred to as a beam pair, a beam combination, or the like, which is not limited here.

S220: The first communication device respectively inputs first beam related information corresponding to the at least one beam group into a target AI model so as to obtain at least one piece of second beam related information by means of prediction.

The target AI model may be a neural network, a decision tree, a support vector machine, a Bayesian classifier, or the like, which is not limited here.

Optionally, in this embodiment, the first beam related information is used as the input information to the target AI model, which may include, but is not limited to, at least one of the following (01) to (05).
(01) Beam quality related information. The beam quality related information mentioned in this application is information that characterizes beam quality, which may include, but is not limited to, layer 1 (Layer 1, L1)-signal-to-noise and interference ratio (Signal-to-Noise and Interference Ratio, SINR), L1-reference signal received power (Reference Signal Received Power, RSRP), L1-reference signal received quality (Reference Signal Received Quality, RSRQ), L3-SINR, L3-RSRP and L3-RSRQ.
(02) Beam identifier (ID) related information. The beam ID related information is information that characterizes beam identification, which includes, but is not limited to, at least one of the following: a transmitting beam ID, a receiving beam ID, a reference signal set (set) ID corresponding to the beam, a reference signal resource (resource) ID corresponding to the beam, a random ID of a unique identifier and a coded value processed by an additional AI model.
(03) Beam angle related information. The beam angle related information is information that characterizes an angle corresponding to the beam, which includes, but is not limited to, at least one of the following: angle related information, transmitting angle related information and receiving angle related information. The above angle related information is information that characterizes an angle, such as an angle, a radian, an index coded value, and a coded value processed by an additional AI model.
(04) Beam gain related information. The beam gain related information is information that characterizes a gain of the beam and/or antenna, which includes, but is not limited to, at least one of the following: an antenna relative gain (unit: dBi), effective isotropic radiated power (Effective Isotropic Radiated Power, EIRP), a beam angle gain, a beam angle gain spectrum (i.e., the gain of a beam relative to different angles, including complete or partial gain spectrum information), EIRP corresponding to each beam angle, a main lobe angle, a side lobe angle, the number of side lobes, the distribution of side lobes, the number of antennas, a horizontal coverage range of beam scanning, a vertical coverage range of beam scanning, a 3dB width and a 6dB width.
(05) Beam width related information.

The second beam related information is used as the output information from the target AI model, which corresponds to the beam group. For example, if the first communication device uses 3 beam groups for beam prediction, 3 pieces of second beam related information are obtained by means of prediction.

Based on this, in this embodiment, corresponding to the first beam related information, the second beam related information may also include beam quality related information, beam ID related information, beam angle related information, beam gain related information and beam width related information. To avoid repetition, details are not described here. Furthermore, the first beam related information and the second beam related information may also be time information related thereto in addition to the above beam quality related information, beam ID related information, beam angle related information, beam gain related information and beam width related information.

S230: The first communication device performs performance verification on the target AI model according to the at least one piece of second beam related information, or the first communication device transmits the at least one piece of second beam related information to a second communication device, where the at least one piece of second beam related information is used for the second communication device to perform performance verification on the target AI model.

It can be understood that the above "validity verification of the target AI model" can also be understood as model checking, model adjustment, model fine-adjustment, model updating, etc.

Based on this, the first communication device can autonomously perform performance verification on the target AI model according to the self-capability or communication needs after obtaining the second beam related information by means of prediction, and can also transmit the second beam related information obtained by means of prediction to the second communication device to perform performance verification on the target AI model.

In this embodiment, the first communication device obtains at least one beam group, and the first beam related information corresponding to the at least one beam group is used as the input to the target AI model so as to obtain at least one piece of second beam related information by means of prediction, thereby performing verification of the performance of the target AI model according to the at least one piece of second beam related information. Therefore, on the one hand, the verification of the validity of the target AI model can be achieved. On the other hand, considering that the second beam related information obtained by using different beam groups is different (i.e., the performance of the target AI model obtained is different), but the label beam related information corresponding to different beam groups is the same, in this embodiment, multiple different beam groups are used for performing performance verification on the target AI model, thereby avoiding the problem of different model performance verification results caused by different beam groups, and improving the accuracy of model performance verification results.

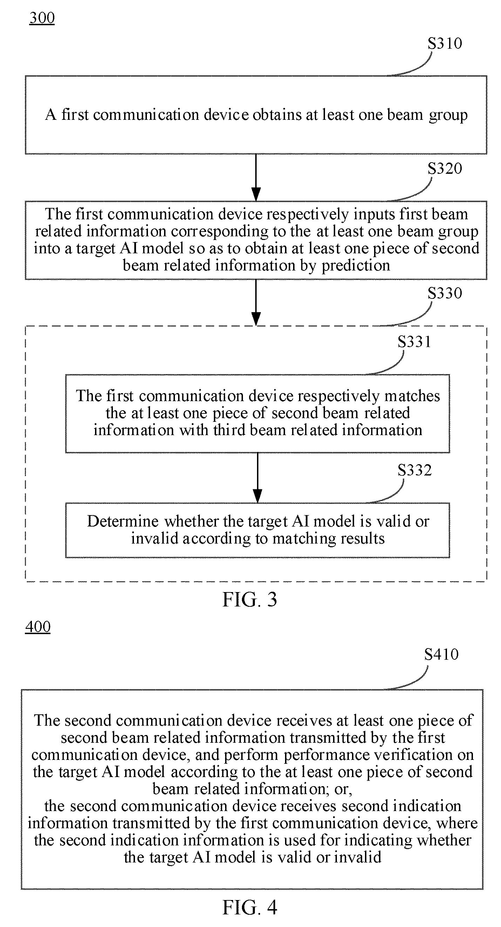

FIG. 3 shows a schematic flowchart of a model validity determination method 300 provided in an exemplary embodiment of this application. The method 300 may be executed by, but is not limited to be executed by, the first communication device, and specifically may be executed by hardware and/or software installed in the first communication device. In this embodiment, the method 300 at least may include the following steps.

S310: The first communication device obtains at least one beam group.

Each beam group includes at least one beam.

It can be understood that the implementation process of S310 can refer to the related description in the method embodiment 200. Furthermore, as a possible implementation mode, the first communication device can obtain at least one beam group arbitrarily, or obtain at least one beam group according to at least one of the following (11) to (13).

(11) The first communication device obtains the at least one beam group according to a mode agreed in a protocol.

When the first communication device obtains the at least one beam group according to a mode agreed in a protocol, the first communication device may obtain the at least one beam group according to the information such as a specific beam ID agreed in the protocol, or may also obtain the at least one beam group according to a beam group obtaining mode or beam group obtaining condition (such as the first condition mentioned in (13) below) agreed in the protocol, which is not limited here.

(12) The first communication device obtains the at least one beam group according to received first indication information.

The first indication information may be an implicit indication or an explicit indication. In addition, the timing of receiving the first indication information, or the like may also be determined through the above mode agreed in the protocol.

(13) The first communication device obtains at least one beam group according to the first condition, where the first condition includes at least one of the following (131) to (135).

(131) At least parts in the beam ID related information corresponding to different beam groups are different. For example, assuming that the first communication device obtains a beam group 1 and a beam group 2, the beam group 1 includes beams with IDs 1, 2, 3 and 5, and the beam group 2 may include beams with IDs 1, 2, 3 and 7.

(132) At least parts in the quantity of the beam ID related information corresponding to different beam groups are different. For example, assuming that the first communication device obtains a beam group 1, a beam group 2 and a beam group 3, the beam group 1 includes 5 beams, the beam group 2 includes 4 beams identified, and the beam group 3 includes 3 beams identified.

(133) At least parts in the order of the beam ID related information corresponding to different beam groups are different. For example, assuming that the first communication device obtains a beam group 1 and a beam group 2, the order of the beams included in the beam group 1 is 1, 2, 3 and 5, and the order of the beams included in the beam group 2 is 1, 2, 5 and 3.

(134) The beam ID related information corresponding to different beam groups is obtained at different time periods. For example, assuming that the first communication device obtains a beam group 1 and a beam group 2, the beam related information corresponding to the beam group 1 is obtained at a time period T1, and the beam related information corresponding to the beam group 2 is obtained at a time period T2.

(135) The beam ID related information is obtained at P time periods, and each time period corresponds to N beam groups, where the P time periods are the P time periods closest to the time for the first communication device to perform performance verification on the target AI model, and P and N are integers greater than 0.

It is worth noting that for the above beam group obtaining conditions, beam groups with different beam combination conditions may belong to different beam groups.

Of course, in an implementation mode, the at least one beam group includes a beam group used during the first model verification on the target AI model, and/or a beam group used during the use of the target AI model. The above "first model verification" may be understood as: assuming that the first communication device performs the 2^{nd}, 3^{rd}, ..., n^{th} performance verification on the target AI model, the at least one beam group used for performing performance verification may include the beam group used during the first model verification on the target AI model. Correspondingly, the above "use of the target AI model" may be understood as: The first communication device uses the target AI model for performing beam prediction and other operations (different from model performance verification).

S320: The first communication device respectively inputs the first beam related information corresponding to the at least one beam group into the target AI model so as to obtain at least one piece of second beam related information by means of prediction.

The second beam related information corresponds to the beam group.

It can be understood that the implementation process of S320 can refer to the related description in the method embodiment 200. To avoid repetition, details are not described here.

S330: The first communication device performs performance verification on the target AI model according to the at least one piece of second beam related information.

It can be understood that the implementation process of S330 can refer to the related description in the method embodiment 200. Furthermore, as a possible implementation mode, the step of performing performance verification, by the first communication device, on the target AI model according to the at least one piece of second beam related information in S330 may include S331 and S332 shown in FIG. 3, and the content is as follows.

S331: The first communication device respectively matches the at least one piece of second beam related information with third beam related information.

The third beam related information is label beam related information corresponding to the at least one beam group (which may also be understood as real beam related information or actual beam related information corresponding to the beam, etc.). That is to say, in this embodiment, during verification on the target AI model, by means of the characteristic that the second beam related information obtained by different beam groups is different (i.e., the performance of the target AI model obtained is different), but the label beam related information corresponding to different beam groups is the same, the beam related information corresponding to multiple different beam groups obtained by means of prediction is respectively matched with the real beam related information, thereby integrating multiple different matching results to achieve the verification of the validity of the target AI model and ensure the accuracy of the verification result of the validity of the target AI model.

Based on this, in an implementation mode, the step of matching, by the first communication device, the at least one piece of second beam related information with third beam related information may include any one of the following (21) to (22).

(21) For each piece of second beam related information in the at least one piece of second beam related information, the first communication device respectively matches at least part of each piece of second beam related information with the third beam related information. That is to say, when the first communication device uses the second beam related information to perform validity verification on the target AI model, all the information in each piece of second related information may be respectively matched with the third beam related information, or part of (such as beam quality related information) each piece of second beam related information may be selected first, and then, the selected part of information is respectively matched with the third beam related information, which is not limited in this embodiment.

Of course, for different second beam related information, the mode of selecting part of information may be the same or different, which is not limited here. For example, for second beam related information A, beam quality related information therein may be selected; and for second beam related information B, beam identification related information therein may be selected, ....

(22) For each piece of second beam related information in the at least one piece of second beam related information, the first communication device performs first processing on at least part of each piece of second beam related information, and respectively matches processing results with the third beam related information. That is to say, when the first communication device uses the second beam related information to perform performance verification on the target AI model, at least part of information may be selected first from each piece of second related information, then, first processing is performed on the at least part of selected information, and finally, at least part of information after first processing is respectively matched with the third beam related information.

In an implementation mode, assuming that the second beam related information includes beam quality related information, the step of performing first processing, by the first communication device, on at least part of each piece of second beam related information may include at least one of the following (221) to (225).

(221) Beam quality related information with a maximum value is selected respectively from multiple pieces of beam quality related information included in the second beam related information for each piece of second beam related information in the at least one piece of second beam related information.

(222) At least part of beam quality related information is selected from multiple pieces of beam quality related information included in the second beam related information for each piece of second beam related information in the at least one piece of second beam related information.

(223) Beam quality related information with a value greater than a first threshold is selected from multiple pieces of beam quality related information included in the second beam related information for each piece of second beam related information in the at least one piece of second beam related information.

(224) The at least one piece of second beam related information is combined. For example, the at least one piece of second beam related information may be combined according to the corresponding beam group obtaining time, or combined according to the size of the beam quality related information included in the second beam related information, or combined according to the obtaining time of the second beam related information, etc., which is not limited here.

(225) Beam ID related information corresponding to target beam quality related information is determined, where the target beam quality related information includes any one of the beam quality related information with the maximum value, the at least part of beam quality related information, and the beam quality related information with the value greater than the first threshold.

It is worth noting that for different second beam related information, the mode of selecting at least part of information may be different or the same, and the first processing used for at least part of the selected information may also be the same or different. Of course, the specific selecting mode or first processing mode may be implemented by means of protocol agreement or high-level configuration, or the like, which is not limited here.

S332: It is determined that whether the target AI model is valid or invalid according to matching results.

In an implementation mode, the step of determining, by the first communication device, whether the target AI model is valid or invalid according to matching results may include at least one of the following (31) to (32).

(31) It is determined that the target AI model is valid in a case that the matching results are within a first reference value interval.

The first reference value interval may be an accuracy, a probability of finding an optimal beam set, a mean absolute error (Mean Absolute Error, MAE), a mean squared error (Mean Squared Error, MSE), a normalized mean squared error (Normalized Mean Squared Error, NMSE), or the like.

For example, assuming that the matching result is a difference between the second beam related information and the third beam related information, when the difference is within the first reference value interval (less than or equal to a third threshold), it is determined that the target AI model is valid.

For another example, assuming that the matching result is an accuracy calculated according to the second beam related information and the third beam related information, when the accuracy is within the first reference value interval (equal to or greater than a fourth threshold), it is determined that the target AI model is valid.

For another example, assuming that the matching result is a probability of finding an optimal beam according to the second beam related information and the third beam related information, when the probability of finding an optimal beam is within the first reference value interval, it is determined that the target AI model is valid.

Based on this, as an implementation mode, there may be multiple modes of determining that the target AI model is valid in a case that the matching result is within the first reference value interval. The implementation processes will be described below in conjunction with Mode 1 to Mode 3.

Mode 1: It is determined that the target AI model is valid in a case that multiple matching results are provided and the multiple matching results are all within the first reference value interval.

It can be understood that a matching result corresponds to a piece of second beam related information, that is, a matching result is the result of matching a piece of second beam related information with third beam related information. Thus, in a case that there are multiple pieces of second beam related information, if multiple corresponding matching results are all within the first reference value interval, it is determined that the target AI model is valid.

Mode 2: It is determined that the target AI model is valid in a case that multiple matching results are provided and the quantity of matching results within the first reference value interval reaches a second threshold.

It can be understood that a matching result corresponds to a piece of second beam related information, that is, a matching result is the result of matching a piece of second beam related information with third beam related information. Thus, in a case that there are multiple pieces of second beam related information, if 80% (second threshold) of multiple corresponding matching results are within the first reference value interval, it is determined that the target AI model is valid.

Mode 3: It is determined that the target AI model is valid in a case that multiple matching results are provided and the mean value of the multiple matching results is within the first reference value interval.

It is worth noting that in addition to the above Mode 1 to Mode 3, in a possible implementation mode, if the first communication device obtains at least one beam group according to the beam group obtaining condition that the at least one beam group is obtained at P time periods and different time periods correspond to N beam groups, the step of determining, by the first communication device, that the target AI model is valid in a case that the matching results are within the first reference value interval includes the following Mode 4 or Mode 5.

Mode 4: It is determined that the target AI model is valid in a case that the target AI model is valid at L time periods, where the L time periods belong to the P time periods, L is an integer equal to or greater than 0, and L is less than or equal to P. For example, assuming that the at least one beam group is obtained at 5 (namely P) time periods and the target AI model is valid at 3 (namely L) time periods, it is determined that the target AI model is valid.

Optionally, modes of determining that the target AI model is valid at the L time periods may include any one of the following.

It is determined that the target AI model is valid at the time period in a case that the matching results of M1 pieces of second beam related information corresponding to at least M1 beam groups at the time period and the third beam related information are all within the first reference value interval for each time period in the L time periods, where M1 is an integer equal to or greater than 0, and M1 is less than or equal to N. That is to say, taking a time period A in the L time periods as an example, if 10 (namely N) beam groups are obtained at the time period, when the matching results of 8 pieces of second beam related information corresponding to 8 (namely M1) beam groups and the third beam related information are all within the first reference value interval, it is determined that the target AI model is valid at the time period A.

It is determined that the target AI model is valid at the time period in a case that the mean value of the matching results of M2 pieces of second beam related information corresponding to at least M2 beam groups at the time period and the third beam related information is within the first reference value interval for each time period in the L time periods, where M2 is an integer equal to or greater than 0, and M2 is less than or equal to N. That is to say, taking a time period B in the L time periods as an example, if 10 (namely N) beam groups are obtained at the time period, when the mean value of matching results of 8 pieces of second beam related information corresponding to 8 (namely M2) beam groups and the third beam related information is within the first reference value interval, it is determined that the target AI model is valid at the time period B.

Mode 5: It is determined that the target AI model is valid in a case that the mean value of matching results of the second beam related information corresponding to S time periods and the third beam related information is within the first reference value interval, where the S time periods belong to the P time periods, S is an integer equal to or greater than 0, and S is less than or equal to P.

It is worth noting that the use of the above Mode 1 to Mode 5 for the first communication device to perform model performance verification may be implemented by means of protocol agreement, high-level configuration or network side configuration, which is not limited here.

In an implementation mode, according to the above different matching results, modes of determining or obtaining the first reference value may be different. In this embodiment, modes of obtaining the first reference value interval may include at least one of the following (41) to (44).

(41) Determining by signaling interaction. For example, the first reference value interval may be configured directly by means of protocol agreement, high-level configuration or network side configuration, or the like, or a threshold or point value may also be configured directly by means of protocol agreement, high-level configuration or network side configuration, or the like, and then, the first reference value interval is determined according to the rules configured by the first communication device in advance and the threshold or point value, which is not limited in this embodiment.

(42) Determining according to the verification result obtained during the first model verification on the target AI model. Assuming that the verification result obtained by the first communication device during the first model verification is that the accuracy of the target AI model is 80%, the first communication device may determine that the first reference value interval is [80%, 100%], [85%, 100%] or [75%, 100%], or the like according to the "accuracy of 80%", which is not limited here.

Alternatively, the first communication device may additionally interact with a set of beam data, including the input to the target AI model, the output from the AI model, a calculation method of loss and a tolerance range. Through this set of data, it is possible to verify the target AI model and/or obtain the first reference value interval during verification on the target AI model.

(43) Determining according to the model performance of the target AI model corresponding to a first beam group. The first beam group may be a beam group specified by means of protocol agreement or network side configuration, or the like. Based on this, the first communication device may first obtain the model performance of the target AI model according to the beam related information corresponding to the first beam group when obtaining the first reference value interval. If the accuracy of the target AI model is 80%, the first communication device may determine that the first reference value interval is [80%, 100%], [85%, 100%] or [75%, 100%] according to the "accuracy of 80%", which is not limited here.

(44) Determining according to a third reference value interval and a first auxiliary reference value. Modes of obtaining the third reference value interval include at least one of the following (a) to (c).
(a) Obtaining by signaling interaction.
(b) Determining according to the verification result obtained during the first model verification on the target AI model.
(c) Determining according to the model performance of the target AI model corresponding to a second beam group.

It can be understood that the mode of obtaining the third reference value interval defined in the above (a) to (c) is similar to the mode of obtaining the first reference value interval defined in the above (41) to (43). To avoid repetition, details are not described here.

In addition, the first auxiliary reference value may be obtained by means of interaction, such as protocol agreement, high-level configuration or network side configuration.

(32) It is determined that the target AI model is invalid in a case that the matching results are within a second reference value interval.

Similar to the mode of verifying the validity of the target AI model given in the above (31), modes of determining, by the first communication device, that the target AI model incurs invalidation may also include the following Mode 6 to Mode 8, and the content is as follows.

Mode 6: It is determined that the target AI model is invalid in a case that multiple matching results are provided and the multiple matching results are all within the second reference value interval.

Mode 7: It is determined that the target AI model is invalid in a case that multiple matching results are provided and the quantity of matching results within the second reference value interval reaches a fifth threshold.

Mode 8: It is determined that the target AI model is invalid in a case that multiple matching results are provided and the mean value of the multiple matching results is within the second reference value interval.

It is worth noting that in addition to the above Mode 6 to Mode 8, in a possible implementation mode, if the first communication device obtains at least one beam group according to the beam group obtaining condition that the at least one beam group is obtained at P time periods and different time periods correspond to N beam groups, the step of determining, by the first communication device, that the target AI model is invalid in a case that the matching results are within the second reference value interval includes the following Mode 9 or Mode 10.

Mode 9: It is determined that the target AI model incurs invalidation in a case that the target AI model incurs invalidation at L time periods, where the L time periods belong to the P time periods, L is an integer equal to or greater than 0, and L is less than or equal to P.

Optionally, modes of determining that the target AI model incurs invalidation at the L time periods may include any one of the following.

It is determined that the target AI model incurs invalidation at the time period in a case that the matching results of M1 pieces of second beam related information corresponding to at least M1 beam groups at the time period and the third beam related information are all within the second reference value interval for each time period in the L time periods, where M1 is an integer equal to or greater than 0, and M1 is less than or equal to N.

It is determined that the target AI model incurs invalidation at the time period in a case that the mean value of the matching results of M2 pieces of second beam related information corresponding to at least M2 beam groups at the time period and the third beam related information is within the second reference value interval for each time period in the L time periods, where M2 is an integer equal to or greater than 0, and M2 is less than or equal to N.

Mode 10: It is determined that the target AI model incurs invalidation in a case that the mean value of matching results of the second beam related information corresponding to S time periods and the third beam related information is within the second reference value interval, where the S time periods belong to the P time periods, S is an integer equal to or greater than 0, and S is less than or equal to P.

It is worth noting that the use of the above Mode 6 to Mode 10 for the first communication device to perform model performance verification may be implemented by means of protocol agreement, high-level configuration or network side configuration, which is not limited here. In addition, the implementation processes of the above Mode 6 to Mode 10 can refer to the related description in the above Mode 1 to Mode 5, which will not be described here.

Exemplarily, assuming that there are a total of 32 beam pairs with IDs of beam groups ranging from 1 to 32, the input to the target AI model is related to 4 beam IDs, and the output is the predicted beam quality of 32 beam pairs (namely the second beam related information), where the IDs of the beam group 1 are 1, 2, 3 and 4, the IDs of the beam group 2 are 4, 3, 2 and 1, the IDs of the beam group 3 are 1, 4, 6 and 9, and the IDs of the beam group 4 are 1, 9, 18 and 30. In this way, the prediction result related information (namely the matching result of the second beam related information and the third beam related information) corresponding to the specified beam group 4 may be compared with the first reference value interval. If the prediction result related information is within the first reference value interval, it is determined that the performance of the target AI model is good. If the prediction result related information is within the second reference value interval, it is determined that the performance of the target AI model is bad.

Alternatively, the prediction result related information (namely the matching result of the second beam related information and the third beam related information) corresponding to 4 beam groups may also be respectively compared with the first reference value interval. If there are 2 (or 3/4) pieces of prediction result related information within the first reference value interval, it is determined that the performance of the target AI model is good. If there is 1 piece of prediction result related information within the first reference value interval, it is determined that the performance of the target AI model is bad. Alternatively, if there are 2 (or 3/4) pieces of prediction result related information within the second reference value interval, it is determined that the performance of the target AI model is bad.

In addition, corresponding to the above first reference value interval, modes of obtaining the second reference value interval may also include at least one of the following: determining by signaling interaction; determining according to the verification result obtained during the first model verification on the target AI model; determining according to the model performance of the target AI model corresponding to a first beam group; and determining according to a fourth reference value interval and a second auxiliary reference value. In a case that the second reference value interval is determined according to the fourth reference value interval and the second auxiliary reference value, modes of obtaining the fourth reference value interval include at least one of the following: obtaining by signaling interaction; determining according to the verification result obtained during the first model verification on the target AI model; and determining according to the model performance of the target AI model corresponding to a second beam group. It can be understood that the above mode of obtaining the second reference value is similar to the above mode of obtaining the first reference value, and the above mode of obtaining the fourth reference value is similar to the above mode of obtaining the third reference value. To avoid repetition, details are not described here.

It is worth noting that the first threshold, second threshold, third threshold, fourth threshold, fifth threshold, P, S, L, M1, M2, or the like mentioned in this application may be determined by means of interaction, such as protocol agreement, high-level configuration or network side configuration, or the like, which is not limited here.

Of course, based on the above description of the process of determining the model validity, as a possible implementation mode, after determining whether the target AI model is valid or invalid, the first communication device may transmit second indication information to the second communication device, where the second indication information is used for indicating whether the target AI model is valid or invalid. As a result, the consistency in the understanding of the performance of the target AI model by the first communication device and the second communication device is ensured, thereby determining the performance of the communication system.

FIG. 4 shows a schematic flowchart of a model validity determination method 400 provided in an exemplary embodiment of this application. The method 400 may be executed by, but is not limited to be executed by, the second communication device, and specifically may be executed by hardware and/or software installed in the second communication device. In this embodiment, the method 400 at least may include the following steps.

S410: The second communication device receives at least one piece of second beam related information transmitted by the first communication device, and performs performance verification on the target AI model according to the at least one piece of second beam related information; or the second communication device receives second indication information transmitted by the first communication device.

The second indication information is used for indicating whether the target AI model is valid or invalid. It should be noted that in this embodiment, the second communication device may use the mode the same as the mode in the method embodiments 200 to 300 to verify the performance of the target AI model so as to perform performance verification on the target AI model, or may use the mode different from the mode in the method embodiments 200 to 300 to verify the performance of the target AI model, which is not limited here.

Optionally, the second beam related information includes at least one of the following: beam quality related information; beam ID related information; beam angle related information; beam gain related information; and beam width related information.

It can be understood that the implementation modes mentioned in the method embodiment 400 have the technical features the same as or corresponding to those in the implementation modes mentioned in the above method embodiments 200 and/or 300, so that the implementation processes of the implementation modes mentioned in the method embodiment 400 can refer to the related description in the method embodiments 200 and/or 300, and can achieve the same or corresponding technical effects. To avoid repetition, details are not described here.

An executive body for the model validity determination methods 200 to 400 provided in the embodiments of this application may be a model validity determination apparatus. In the embodiment of this application, the model validity determination apparatus executing the model validity determination method is taken as an example to describe the model validity determination apparatus provided in the embodiment of this application.

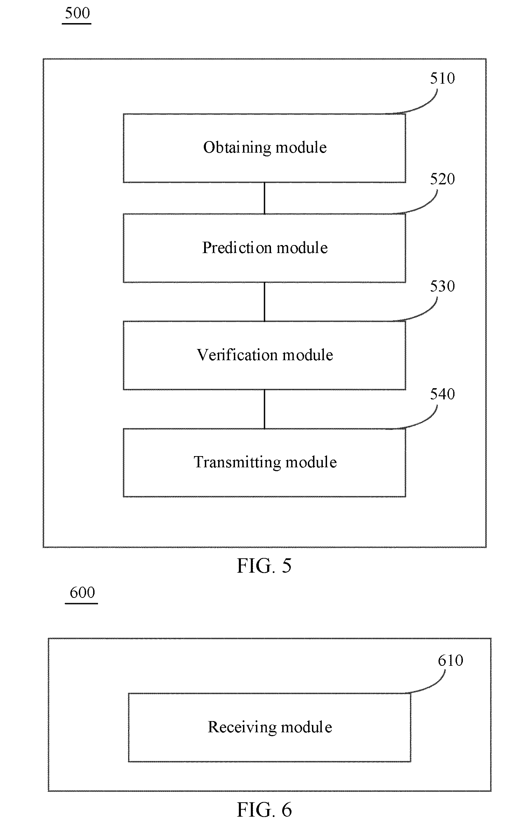

FIG. 5 shows a schematic structural diagram of a model validity determination apparatus 500 provided in an exemplary embodiment of this application. The apparatus 500 includes: an obtaining module 510, configured to obtain at least one beam group, where each beam group includes at least one beam; a prediction module 520, configured to respectively input first beam related information corresponding to the at least one beam group into a target AI model so as to obtain at least one piece of second beam related information by means of prediction, where the second beam related information corresponds to the beam group; and a verification module 530, configured to perform performance verification on the target AI model according to the at least one piece of second beam related information, or a transmitting module 540, configured to transmit the at least one piece of second beam related information to a second communication device, where the at least one piece of second beam related information is used for the second communication device to perform performance verification on the target AI model.

Optionally, the step of performing performance verification, by the verification module 530, on the target AI model according to the at least one piece of second beam related information includes: the verification module 530 respectively matches the at least one piece of second beam related information with third beam related information; and determines whether the target AI model is valid or invalid according to matching results, where the third beam related information is label beam related information corresponding to the at least one beam group.

Optionally, the step of matching, by the verification module 530, the at least one piece of second beam related information with third beam related information includes any one of the following: for each piece of second beam related information in the at least one piece of second beam related information, the verification module 530 respectively matches at least part of each piece of second beam related information with the third beam related information; and for each piece of second beam related information in the at least one piece of second beam related information, the verification module 530 performs first processing on at least part of each piece of second beam related information, and respectively matches processing results with the third beam related information.

Optionally, the step of performing first processing, by the verification module 530, on at least part of each piece of second beam related information includes at least one of the following: beam quality related information with a maximum value is selected from multiple pieces of beam quality related information included in the second beam related information for each piece of second beam related information in the at least one piece of second beam related information; at least part of beam quality related information is selected from multiple pieces of beam quality related information included in the second beam related information for each piece of second beam related information in the at least one piece of second beam related information; beam quality related information with a value greater than a first threshold is selected from multiple pieces of beam quality related information included in the second beam related information for each piece of second beam related information in the at least one piece of second beam related information; the at least one piece of second beam related information is combined; and beam ID related information corresponding to target beam quality related information is determined, where the target beam quality related information includes any one of the beam quality related information with the maximum value, the at least part of beam quality related information, and the beam quality related information with the value greater than the first threshold.

Optionally, the step of determining, by the verification module 530, whether the target AI model is valid or invalid according to matching results includes at least one of the following: the verification module 530 determines that the target AI model is valid in a case that the matching results are within a first reference value interval; and the verification module 530 determines that the target AI model is invalid in a case that the matching results are within a second reference value interval.

Optionally, the step of determining, by the verification module 530, that the target AI model is valid in a case that the matching results are within a first reference value interval includes any one of the following: it is determined that the target AI model is valid in a case that multiple matching results are provided and the multiple matching results are all within the first reference value interval; it is determined that the target AI model is valid in a case that multiple matching results are provided and the quantity of matching results within the first reference value interval reaches a second threshold; and it is determined that the target AI model is valid in a case that multiple matching results are provided and the mean value of the multiple matching results is within the first reference value interval.

Optionally, modes of obtaining the first reference value interval include at least one of the following: determining by signaling interaction; determining according to the verification result obtained during the first model verification on the target AI model; determining according to the model performance of the target AI model corresponding to a first beam group; and determining according to a third reference value interval and a first auxiliary reference value; and/or, modes of obtaining the second reference value interval include at least one of the following: determining by signaling interaction; determining according to the verification result obtained during the first model verification on the target AI model; determining according to the model performance of the target AI model corresponding to a first beam group; and determining according to a fourth reference value interval and a second auxiliary reference value.

Optionally, in a case that the first reference value interval is determined according to the third reference value interval and the first auxiliary reference value, modes of obtaining the third reference value interval include at least one of the following: obtaining by signaling interaction; determining according to the verification result obtained during the first model verification on the target AI model; and determining according to the model performance of the target AI model corresponding to a second beam group; and/or, in a case that the second reference value interval is determined according to the fourth reference value interval and the second auxiliary reference value, modes of obtaining the fourth reference value interval include at least one of the following: obtaining by signaling interaction; determining according to the verification result obtained during the first model verification on the target AI model; and determining according to the model performance of the target AI model corresponding to a second beam group.

Optionally, the step of obtaining, by the obtaining module 510, at least one beam group includes at least one of the following: the obtaining module 510 obtains the at least one beam group according to a mode agreed in a protocol; the obtaining module 510 obtains the at least one beam group according to received first indication information; and the obtaining module 510 obtains the at least one beam group according to a first condition, where the first condition includes at least one of the following that: at least parts in the beam ID related information corresponding to different beam groups are different; at least parts in the quantity of the beam ID related information corresponding to different beam groups are different; at least parts in the order of the beam ID related information corresponding to different beam groups are different; the beam ID related information corresponding to different beam groups is obtained at different time periods; and the beam ID related information is obtained at P time periods, and each time period corresponds to N beam groups, where the P time periods are the P time periods closest to the time for the verification module 530 to perform performance verification on the target AI model, and P and N are integers greater than 0.

Optionally, in a case that the first condition includes that the beam ID related information corresponding to the different beam groups is obtained at different time periods, the time period is at least one time period closest to the time for the first communication device to perform performance verification on the target AI model.

Optionally, in a case that the first condition includes that the beam ID related information is obtained at P time periods and different time periods correspond to N beam groups, the step of determining, by the verification module 530, that the target AI model is valid in a case that the matching results are within a first reference value interval includes any one of the following: the verification module 530 determines that the target AI model is valid in a case that the target AI model is valid at L time periods, where the L time periods belong to the P time periods, L is an integer equal to or greater than 0, and L is less than or equal to P; and the verification module 530 determines that the target AI model is valid in a case that the mean value of matching results of the second beam related information corresponding to S time periods and the third beam related information is within the first reference value interval, where the S time periods belong to the P time periods, S is an integer equal to or greater than 0, and S is less than or equal to P.

Optionally, the step of determining that the target AI model is valid at the L time periods includes any one of the following: it is determined that the target AI model is valid at the time period in a case that the matching results of M1 pieces of second beam related information corresponding to at least M1 beam groups at the time period and the third beam related information are all within the first reference value interval for each time period in the L time periods; and it is determined that the target AI model is valid at the time period in a case that the mean value of the matching results of M2 pieces of second beam related information corresponding to at least M2 beam groups at the time period and the third beam related information is within the first reference value interval for each time period in the L time periods, where M1 and M2 are integers equal to or greater than 0, and M1 and M2 are less than or equal to N.

Optionally, the first beam related information and/or the second beam related information includes at least one of the following: beam quality related information; beam ID related information; beam angle related information; beam gain related information; and beam width related information.

Optionally, the at least one beam group includes a beam group used during the first model verification on the target AI model, and/or a beam group used during the use of the target AI model.

Optionally, the transmitting module 540 is further configured to transmit second indication information to a second communication device, where the second indication information is used for indicating whether the target AI model is valid or invalid.

FIG. 6 shows a schematic structural diagram of a model validity determination apparatus 600 provided in an exemplary embodiment of this application. The apparatus 600 includes: a receiving module 610, configured to perform any one of the following: receiving at least one piece of second beam related information transmitted by a first communication device, and performing performance verification on a target AI model according to the at least one piece of second beam related information; and receiving second indication information transmitted by the first communication device, where the second indication information is used for indicating whether the target AI model is valid or invalid.

Optionally, the second beam related information includes at least one of the following: beam quality related information; beam ID related information; beam angle related information; beam gain related information; and beam width related information.

The model validity determination apparatuses 500 to 600 in the embodiments of this application may be a communication device, such as a terminal or a network side device, or a component in a communication device, such as an integrated circuit or a chip. Exemplarily, when the model validity determination apparatuses 500 to 600 are a terminal, the terminal may include, but is not limited to, the type of the terminal 11 listed above; and when the model validity determination apparatuses 500 to 600 are a network side device, the network side device may include, but is not limited to, the type of the network side device 12 listed above. This is not specifically limited in the embodiments of this application.

The model validity determination apparatuses 500 to 600 provided in the embodiments of this application can implement the processes implemented by the method embodiments in FIG. 2 to FIG. 4, and achieve the same technical effects. To avoid repetition, details are not described here.

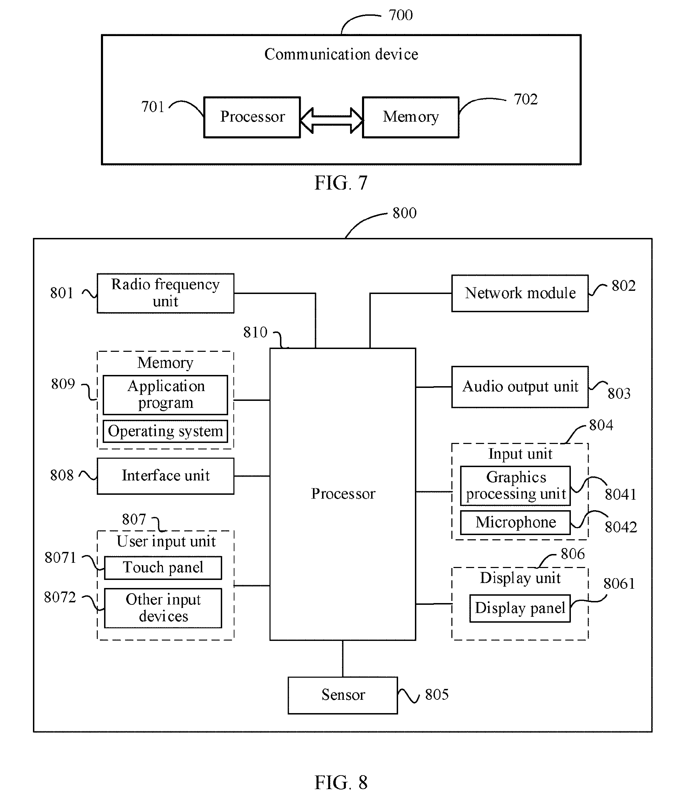

Optionally, as shown in FIG. 7, an embodiment of this application further provides a communication device 700, including a processor 701 and a memory 702. The memory 702 stores programs or instructions executable on the processor 701. For example, when the communication device 700 is a terminal, and when the programs or instructions are executed by the processor 701, steps in the above method embodiments 200 to 400 are implemented, and the same technical effects can be achieved. When the communication device 700 is a network side device, and when the programs or instructions are executed by the processor 701, steps in the above method embodiments 200 to 400 are implemented, and the same technical effects can be achieved. To avoid repetition, details are not described here.

An embodiment of this application further provides a terminal, including a processor and a communication interface. The communication interface is coupled to the processor, and the processor is configured to run programs or instructions to implement steps of the methods in the method embodiments 200 to 400. The terminal embodiment corresponds to the above terminal side method embodiment, and various implementation processes and implementation modes of the above method embodiment can be applicable to this terminal embodiment, and can achieve the same technical effects. Specifically, FIG. 8 is a schematic diagram of hardware structures of a terminal for implementing an embodiment of this application.

The terminal 800 includes, but is not limited to: at least partial components of a radio frequency unit 801, a network module 802, an audio output unit 803, an input unit 804, a sensor 805, a display unit 806, a user input unit 807, an interface unit 808, a memory 809, and a processor 810, etc.

Those skilled in the art can understand that the terminal 800 may further include a power supply (such as a battery) for supplying power to the components. The power supply may be logically connected to the processor 810 by a power management system, thereby implementing functions such as charging, discharging and power consumption management by the power management system. The terminal structures shown in FIG. 8 do not constitute a limitation on the terminal, and the terminal may include more or fewer components than those shown in figures, or some components may be combined, or different component layouts may be used, which will not be described here.

It should be understood that in the embodiment of this application, the input unit 804 may include a graphics processing unit (Graphics Processing Unit, GPU) 8041 and a microphone 8042. The graphics processing unit 8041 processes image data of a static picture or video that is obtained by an image capture apparatus (such as a camera) in a video capture mode or an image capture mode. The display unit 806 may include a display panel 8061, and the display panel 8061 may be configured in the form of a liquid crystal display, an organic light-emitting diode, or the like. The user input unit 807 includes at least one of a touch panel 8071 and other input devices 8072. The touch panel 8071 is also known as a touch screen. The touch panel 8071 may include two parts: a touch detection apparatus and a touch controller. The other input devices 8072 may include, but are not limited to, a physical keyboard, a functional key (such as a volume control key or a switch key), a track ball, a mouse and a joystick, which will not be described here.

In the embodiment of this application, after the radio frequency unit 801 receives downlink data from the network side device, the downlink data can be transmitted to the processor 810 for processing. In addition, the radio frequency unit 801 can transmit uplink data to the network side device. Generally, the radio frequency unit 801 includes, but is not limited to, an antenna, an amplifier, a transceiver, a coupler, a low noise amplifier and a duplexer.

The memory 809 may be configured to store software programs or instructions and various data. The memory 809 may mainly include a first storage area for storing programs or instructions and a second storage area for storing data, where the first storage area may store an operating system, an application program or instruction required by at least one function (for example, a sound playback function or an image playback function), etc. In addition, the memory 809 may be a volatile memory or a non-volatile memory, or the memory 809 may include both the volatile memory and the non-volatile memory. The non-volatile memory may be a read-only memory (Read-Only Memory, ROM), a programmable ROM (Programmable ROM, PROM), an erasable PROM (Erasable PROM, EPROM), an electrically EPROM (Electrically EPROM, EEPROM), or a flash memory. The volatile memory may be a random access memory (Random Access Memory, RAM), a static RAM (Static RAM, SRAM), a dynamic RAM (Dynamic RAM, DRAM), a synchronous DRAM (Synchronous DRAM, SDRAM), a double data rate SDRAM (Double Data Rate SDRAM, DDRSDRAM), an enhanced SDRAM (Enhanced SDRAM, ESDRAM), a synch link DRAM (Synch link DRAM, SLDRAM), and a direct rambus RAM (Direct Rambus RAM, DRRAM). The memory 809 in the embodiment of this application includes, but is not limited to, these memories and any other suitable types of memories.

The processor 810 may include one or more processing units. Optionally, the processor 810 integrates an application processor and a modem processor, where the application processor mainly processes operations related to an operating system, a user interface, an application program, etc., and the modem processor mainly processes wireless communication signals, such as a baseband processor. It can be understood that the above modem processor may not be integrated into the processor 810.

In an implementation mode, the processor 810 is configured to obtain at least one beam group, where each beam group includes at least one beam; respectively input first beam related information corresponding to the at least one beam group into a target AI model so as to obtain at least one piece of second beam related information by means of prediction, where the second beam related information corresponds to the beam group; and perform performance verification on the target AI model according to the at least one piece of second beam related information, or transmit the at least one piece of second beam related information to a second communication device through the radio frequency unit 801, where the at least one piece of second beam related information is used for the second communication device to perform performance verification on the target AI model.

In another implementation mode, the radio frequency unit 801 is configured to receive at least one piece of second beam related information transmitted by the first communication device, and perform performance verification on the target AI model according to the at least one piece of second beam related information; or receive second indication information transmitted by the first communication device, where the second indication information is used for indicating whether the target AI model is valid or invalid.

In this embodiment, at least one beam group is obtained, and the first beam related information corresponding to the at least one beam group is used as the input to the target AI model so as to obtain at least one piece of second beam related information by means of prediction, thereby performing verification of the performance of the target AI model according to the at least one piece of second beam related information. Therefore, on the one hand, the verification of the validity of the target AI model can be achieved. On the other hand, considering that the second beam related information obtained by using different beam groups is different (i.e., the performance of the target AI model obtained is different), but true values corresponding to different beam groups are the same, in this embodiment, multiple different beam groups are used for performing performance verification on the target AI model, thereby avoiding the problem of different model performance verification results caused by different beam groups, and improving the accuracy of model performance verification results.

An embodiment of this application further provides a network side device, including a processor and a communication interface. The communication interface is coupled to the processor, and the processor is configured to run programs or instructions to implement steps of the methods in the method embodiments 200 to 400. The network side device embodiment corresponds to the above network side device method embodiment, and the implementation processes and implementation modes of the above method embodiment can be applicable to the network side device embodiment, and can achieve the same technical effects.

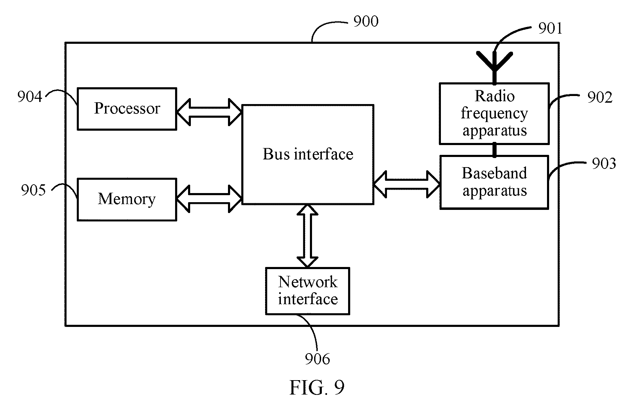

Specifically, an embodiment of this application further provides a network side device. As shown in FIG. 9, the network side device 900 includes: an antenna 901, a radio frequency apparatus 902, a baseband apparatus 903, a processor 904, and a memory 905. The antenna 901 is connected to the radio frequency apparatus 902. In an uplink direction, the radio frequency apparatus 902 receives information through the antenna 901 and transmits the received information to the baseband apparatus 903 for processing. In a downlink direction, the baseband apparatus 903 processes the information to be transmitted and transmits the processed information to the radio frequency apparatus 902, and the radio frequency apparatus 902 processes the received information and then transmits the processed information out through the antenna 901.

The method executed by the network side device in the above embodiment may be implemented in the baseband apparatus 903. The baseband apparatus 903 includes a baseband processor.

The baseband apparatus 903, for example, may include at least one baseband board, and multiple chips are arranged on the baseband board. As shown in FIG. 9, one of the chips is, for example, a baseband processor which is connected to the memory 905 through a bus interface to call programs in the memory 905 to execute the operations of the network device shown in the above method embodiment.

The network side device may also include a network interface 906. The interface is, for example, a common public radio interface (common public radio interface, CPRI).

Specifically, the network side device 900 in the embodiment of the present disclosure further includes: instructions or programs stored in the memory 905 and executable on the processor 904. The processor 904 calls the instructions or programs in the memory 905 to execute the method executed by each module shown in FIG. 5 or FIG. 6 and achieve the same technical effects. To avoid repetition, details are not described here.

An embodiment of this application further provides a readable storage medium. The readable storage medium stores programs or instructions. The programs or instructions, when executed by a processor, implement the processes in the above method embodiments 200 to 400, and can achieve the same technical effects. To avoid repetition, details are not described here.

The processor is the processor in the terminal in the above embodiment. The readable storage medium includes a computer-readable storage medium, such as a computer read-only memory ROM, a read-only memory RAM, a magnetic disk, or an optical disk.

An embodiment of this application further provides a chip. The chip includes a processor and a communication interface. The communication interface is coupled to the processor. The processor is configured to run programs or instructions of the network side device to implement the processes in the above method embodiments 200 to 400, and can achieve the same technical effects. To avoid repetition, details are not described here.

It should be understood that the chip mentioned in the embodiment of this application may also be referred to as a system level chip, a system chip, a chip system, an on-chip system chip, or the like.

An embodiment of this application further provides a computer program product. The computer program product includes a processor, a memory, and programs or instructions stored in the memory and executable on the processor. When the programs or instructions are executed by the processor, the processes in the above method embodiments 200 to 400 are implemented, and the same technical effects can be achieved. To avoid repetition, details are not described here.

An embodiment of this application further provides a communication system, including: a first communication device and a second communication device. The first communication device may be configured to execute the steps of the methods in the above method embodiments 200 to 300, and the second communication device may be configured to execute the steps of the method in the above method embodiment 400.

It should be noted that herein, the terms "include", "contain" or any other variants thereof are intended to cover non-exclusive inclusions, so that a process, method, article, or apparatus including a series of elements includes not only those elements, but also other elements that are not explicitly listed, or further includes elements inherent to such process, method, article, or apparatus. Without more limitations, the element defined by the sentence "including one ..." does not exclude that there are still other same elements in the process, method, article or apparatus including this element. In addition, it should be noted that the scope of the methods and apparatuses in the implementation modes of this application is not limited to execute functions in the order shown or discussed, but may also include executing functions in a substantially simultaneous mode or in an opposite order according to the functions involved. For example, the described method may be executed in an order different from the described order, and various steps may be added, omitted or combined. In addition, features described with reference to some examples may be combined in other examples.

Through the descriptions in the above implementation modes, those skilled in the art can clearly understand that the methods in the above embodiments may be implemented by means of software and a necessary general hardware platform, and certainly, may also be implemented by hardware. However, in many cases, the former is a better implementation mode. Based on such an understanding, the technical solutions in this application essentially, or the part contributing to the prior art, may be embodied in the form of a computer software product. The computer software product is stored in a storage medium (for example, a ROM/RAM, a magnetic disk, or an optical disk), including several instructions to enable a terminal (which may be a mobile phone, a computer, a server, an air conditioner, a network device, or the like) to execute the methods in the embodiments of this application.

The embodiments of this application are described above with reference to the accompanying drawings. However, this application is not limited to the above specific implementation modes. The above specific implementation modes are merely schematic and not limitative. Those of ordinary skill in the art may make various variations under the teaching of this application without departing from the purpose of this application and the protection scope of the claims, and such variations shall all fall within the protection scope of this application.

## Claims

1. A model validity determination method, comprising:
obtaining, by a first communication device, at least one beam group, wherein each beam group comprises at least one beam;
respectively inputting, by the first communication device, first beam related information corresponding to the at least one beam group into a target AI model so as to obtain at least one piece of second beam related information by prediction, wherein second beam related information corresponds to the beam group; and
performing performance verification, by the first communication device, on the target AI model according to the at least one piece of second beam related information, or transmitting, by the first communication device, the at least one piece of second beam related information to a second communication device, wherein the at least one piece of second beam related information is used for the second communication device to perform performance verification on the target AI model.

2. The method according to claim 1, wherein the step of performing performance verification, by the first communication device, on the target AI model according to the at least one piece of second beam related information comprises:
respectively matching, by the first communication device, the at least one piece of second beam related information with third beam related information; and
determining whether the target AI model is valid or invalid according to matching results,
wherein the third beam related information is label beam related information corresponding to the at least one beam group.

3. The method according to claim 2, wherein the step of respectively matching, by the first communication device, the at least one piece of second beam related information with third beam related information comprises any one of the following:
for each piece of second beam related information in the at least one piece of second beam related information, respectively matching, by the first communication device, at least part of the each piece of the second beam related information with the third beam related information; and
for the each piece of the second beam related information in the at least one piece of second beam related information, performing first processing, by the first communication device, on at least part of the each piece of the second beam related information, and respectively matching processing results with the third beam related information.

4. The method according to claim 3, wherein the step of performing first processing, by the first communication device, on at least part of the each piece of the second beam related information comprises at least one of the following:
for the each piece of the second beam related information in the at least one piece of second beam related information, selecting beam quality related information with a maximum value from multiple pieces of beam quality related information comprised in the second beam related information;
for the each piece of the second beam related information in the at least one piece of second beam related information, selecting at least part of beam quality related information from multiple pieces of beam quality related information comprised in the second beam related information;
for the each piece of the second beam related information in the at least one piece of second beam related information, selecting beam quality related information with a value greater than a first threshold from multiple pieces of beam quality related information comprised in the second beam related information;
combining the at least one piece of second beam related information; and
determining beam identifier ID related information corresponding to target beam quality related information, wherein the target beam quality related information comprises any one of the beam quality related information with the maximum value, the at least part of beam quality related information, and the beam quality related information with the value greater than the first threshold.

5. The method according to any one of claims 2 to 4, wherein the step of determining whether the target AI model is valid or invalid according to matching results comprises at least one of the following:
determining that the target AI model is valid in a case that the matching results are within a first reference value interval; and
determining that the target AI model is invalid in a case that the matching results are within a second reference value interval.

6. The method according to claim 5, wherein the step of determining that the target AI model is valid in a case that the matching results are within a first reference value interval comprises any one of the following:
determining that the target AI model is valid in a case that multiple matching results are provided and the multiple matching results are all within the first reference value interval;
determining that the target AI model is valid in a case that multiple matching results are provided and a quantity of the matching results within the first reference value interval reaches a second threshold; and
determining that the target AI model is valid in a case that multiple matching results are provided and a mean value of the multiple matching results is within the first reference value interval.

7. The method according to claim 5, wherein modes of obtaining the first reference value interval comprise at least one of the following:
determining by signaling interaction;
determining according to verification result obtained during first model verification on the target AI model;
determining according to model performance of the target AI model corresponding to a first beam group; and
determining according to a third reference value interval and a first auxiliary reference value;
and/or,
modes of obtaining the second reference value interval comprise at least one of the following:
determining by signaling interaction;
determining according to the verification result obtained during the first model verification on the target AI model;
determining according to the model performance of the target AI model corresponding to the first beam group; and
determining according to a fourth reference value interval and a second auxiliary reference value.

8. The method according to claim 7, wherein in a case that the first reference value interval is determined according to the third reference value interval and the first auxiliary reference value, modes of obtaining the third reference value interval comprise at least one of the following:
obtaining by signaling interaction;
determining according to the verification result obtained during the first model verification on the target AI model; and
determining according to the model performance of the target AI model corresponding to a second beam group;
and/or,
in a case that the second reference value interval is determined according to the fourth reference value interval and the second auxiliary reference value, modes of obtaining the fourth reference value interval comprise at least one of the following:
obtaining by signaling interaction;
determining according to the verification result obtained during the first model verification on the target AI model; and
determining according to the model performance of the target AI model corresponding to the second beam group.

9. The method according to any one of claims 1 to 5, wherein the step of obtaining, by a first communication device, at least one beam group comprises at least one of the following:
obtaining, by the first communication device, the at least one beam group according to a mode agreed in a protocol;
obtaining, by the first communication device, the at least one beam group according to received first indication information; and
obtaining, by the first communication device, the at least one beam group according to a first condition, wherein the first condition comprises at least one of the following that:
at least parts in beam ID related information corresponding to different beam groups are different;
at least parts in a quantity of the beam ID related information corresponding to different beam groups are different;
at least parts in an order of the beam ID related information corresponding to different beam groups are different;
the beam ID related information corresponding to different beam groups is obtained at different time periods; and
the beam ID related information is obtained at P time periods, and each time period corresponds to N beam groups, wherein the P time periods are P time periods closest to a time for the first communication device to perform performance verification on the target AI model, and P and N are integers greater than 0.

10. The method according to claim 9, wherein in a case that the first condition comprises that the beam ID related information corresponding to the different beam groups is obtained at different time periods, the time period is at least one time period closest to the time for the first communication device to perform performance verification on the target AI model.

11. The method according to claim 9, wherein in a case that the first condition comprises that the beam ID related information is obtained at the P time periods and different time periods correspond to the N beam groups, the step of determining that the target AI model is valid in a case that the matching results are within a first reference value interval comprises any one of the following:
determining that the target AI model is valid in a case that the target AI model is valid at L time periods, wherein the L time periods belong to the P time periods, L is an integer equal to or greater than 0, and L is less than or equal to P; and
determining that the target AI model is valid in a case that a mean value of matching results of the second beam related information corresponding to S time periods and third beam related information is within the first reference value interval, wherein the S time periods belong to the P time periods, S is an integer equal to or greater than 0, and S is less than or equal to P.

12. The method according to claim 11, wherein the target AI model is valid at the L time periods comprises any one of the following:
for each time period in the L time periods, determining that the target AI model is valid at the time period, in a case that matching results of M1 pieces of second beam related information corresponding to at least M1 beam groups at the time period and the third beam related information are all within the first reference value interval; and
for each time period in the L time periods, determining that the target AI model is valid at the time period, in a case that a mean value of matching results of M2 pieces of second beam related information corresponding to at least M2 beam groups at the time period and the third beam related information is within the first reference value interval,
wherein M1 and M2 are integers equal to or greater than 0, and M1 and M2 are less than or equal to N.

13. The method according to any one of claims 1 to 12, wherein the first beam related information and/or the second beam related information comprises at least one of the following:
beam quality related information;
beam ID related information;
beam angle related information;
beam gain related information; and
beam width related information.

14. The method according to any one of claims 1 to 13, wherein the at least one beam group comprises a beam group used during first model verification on the target AI model, and/or a beam group used during the use of the target AI model.

15. The method according to any one of claims 1 to 14, wherein after the step of performing performance verification, by the first communication device, on the target AI model according to the at least one piece of second beam related information, the method further comprises:
transmitting, by the first communication device, second indication information to the second communication device, wherein the second indication information is used for indicating whether the target AI model is valid or invalid.

16. A model validity determination method, comprising any one of the following:
receiving, by a second communication device, at least one piece of second beam related information transmitted by a first communication device, and performing performance verification on a target AI model according to the at least one piece of second beam related information; and
receiving, by the second communication device, second indication information transmitted by the first communication device, wherein the second indication information is used for indicating whether the target AI model is valid or invalid.

17. The method according to claim 16, wherein the second beam related information comprises at least one of the following:
beam quality related information;
beam ID related information;
beam angle related information;
beam gain related information; and
beam width related information.

18. A model validity determination apparatus, comprising:
an obtaining module, configured to obtain at least one beam group, wherein each beam group comprises at least one beam;
a prediction module, configured to respectively input first beam related information corresponding to the at least one beam group into a target AI model so as to obtain at least one piece of second beam related information by prediction, wherein second beam related information corresponds to the beam group; and
a verification module, configured to perform performance verification on the target AI model according to the at least one piece of second beam related information, or a transmitting module, configured to transmit the at least one piece of second beam related information to a second communication device, wherein the at least one piece of second beam related information is used for the second communication device to perform performance verification on the target AI model.

19. The apparatus according to claim 18, wherein the step of performing performance verification, by the verification module, on the target AI model according to the at least one piece of second beam related information comprises:
respectively matching, by the verification module, the at least one piece of second beam related information with third beam related information; and determining whether the target AI model is valid or invalid according to matching results, wherein the third beam related information is label beam related information corresponding to the at least one beam group.

20. The apparatus according to claim 19, wherein the step of matching, by the verification module, the at least one piece of second beam related information with third beam related information comprises any one of the following:
for each piece of second beam related information in the at least one piece of second beam related information, respectively matching, by the verification module, at least part of the each piece of the second beam related information with the third beam related information; and
for the each piece of the second beam related information in the at least one piece of second beam related information, performing first processing, by the verification module, on at least part of the each piece of the second beam related information, and respectively matching processing results with the third beam related information.

21. The apparatus according to claim 20, wherein the step of performing first processing, by the verification module, on at least part of the each piece of the second beam related information comprises at least one of the following:
for the each piece of the second beam related information in the at least one piece of second beam related information, selecting beam quality related information with a maximum value from multiple pieces of beam quality related information comprised in the second beam related information;
for the each piece of the second beam related information in the at least one piece of second beam related information, selecting at least part of beam quality related information from multiple pieces of beam quality related information comprised in the second beam related information;
for each piece of second beam related information in the at least one piece of second beam related information, selecting beam quality related information with a value greater than a first threshold from multiple pieces of beam quality related information comprised in the second beam related information;
combining the at least one piece of second beam related information; and
determining beam ID related information corresponding to target beam quality related information, wherein the target beam quality related information comprises any one of the beam quality related information with the maximum value, the at least part of beam quality related information, and the beam quality related information with the value greater than the first threshold.

22. The apparatus according to any one of claims 19 to 21, wherein the step of determining, by the verification module, whether the target AI model is valid or invalid according to matching results comprises at least one of the following:
determining, by the verification module, that the target AI model is valid in a case that the matching results are within a first reference value interval; and
determining, by the verification module, that the target AI model is invalid in a case that the matching results are within a second reference value interval.

23. The apparatus according to claim 22, wherein the step of determining, by the verification module, that the target AI model is valid in a case that the matching results are within a first reference value interval comprises any one of the following:
determining that the target AI model is valid in a case that multiple matching results are provided and the multiple matching results are all within the first reference value interval;
determining that the target AI model is valid in a case that multiple matching results are provided and a quantity of the matching results within the first reference value interval reaches a second threshold; and
determining that the target AI model is valid in a case that multiple matching results are provided and a mean value of the multiple matching results is within the first reference value interval.

24. The apparatus according to claim 22, wherein modes of obtaining the first reference value interval comprise at least one of the following:
determining by signaling interaction;
determining according to verification result obtained during first model verification on the target AI model;
determining according to model performance of the target AI model corresponding to a first beam group; and
determining according to a third reference value interval and a first auxiliary reference value;
and/or,
modes of obtaining the second reference value interval comprise at least one of the following:
determining by signaling interaction;
determining according to the verification result obtained during the first model verification on the target AI model;
determining according to the model performance of the target AI model corresponding to the first beam group; and
determining according to a fourth reference value interval and a second auxiliary reference value.

25. The apparatus according to claim 24, wherein in a case that the first reference value interval is determined according to the third reference value interval and the first auxiliary reference value, modes of obtaining the third reference value interval comprise at least one of the following:
obtaining by signaling interaction;
determining according to the verification result obtained during the first model verification on the target AI model; and
determining according to the model performance of the target AI model corresponding to a second beam group;
and/or,
in a case that the second reference value interval is determined according to the fourth reference value interval and the second auxiliary reference value, modes of obtaining the fourth reference value interval comprise at least one of the following:
obtaining by signaling interaction;
determining according to the verification result obtained during the first model verification on the target AI model; and
determining according to the model performance of the target AI model corresponding to the second beam group.

26. The apparatus according to any one of claims 18 to 22, wherein the step of obtaining, by the obtaining module, at least one beam group comprises at least one of the following:
obtaining, by the obtaining module, the at least one beam group according to a mode agreed in a protocol;
obtaining, by the obtaining module, the at least one beam group according to received first indication information; and
obtaining, by the obtaining module, the at least one beam group according to a first condition, wherein the first condition comprises at least one of the following that:
at least parts in beam ID related information corresponding to different beam groups are different;
at least parts in a quantity of the beam ID related information corresponding to different beam groups are different;
at least parts in an order of the beam ID related information corresponding to different beam groups are different;
the beam ID related information corresponding to different beam groups is obtained at different time periods; and
the beam ID related information is obtained at P time periods, and each time period corresponds to N beam groups, wherein the P time periods are P time periods closest to a time for the verification module to perform performance verification on the target AI model, and P and N are integers greater than 0.

27. The apparatus according to claim 26, wherein in a case that the first condition comprises that the beam ID related information corresponding to the different beam groups is obtained at different time periods, the time period is at least one time period closest to the time for the first communication device to perform performance verification on the target AI model.

28. The apparatus according to claim 26, wherein in a case that the first condition comprises that the beam ID related information is obtained at the P time periods and different time periods correspond to the N beam groups, the step of determining, by the verification module, that the target AI model is valid in a case that the matching results are within a first reference value interval comprises any one of the following:
determining, by the verification module, that the target AI model is valid in a case that the target AI model is valid at L time periods, wherein the L time periods belong to the P time periods, L is an integer equal to or greater than 0, and L is less than or equal to P; and
determining, by the verification module, that the target AI model is valid in a case that a mean value of matching results of the second beam related information corresponding to S time periods and third beam related information is within the first reference value interval, wherein the S time periods belong to the P time periods, S is an integer equal to or greater than 0, and S is less than or equal to P.

29. The apparatus according to claim 28, wherein the target AI model is valid at the L time periods comprises any one of the following:
for each time period in the L time periods, determining that the target AI model is valid at the time period, in a case that matching results of M1 pieces of second beam related information corresponding to at least M1 beam groups at the time period and the third beam related information are all within the first reference value interval; and
for each time period in the L time periods, determining that the target AI model is valid at the time period, in a case that a mean value of matching results of M2 pieces of second beam related information corresponding to at least M2 beam groups at the time period and the third beam related information is within the first reference value interval,
wherein M1 and M2 are integers equal to or greater than 0, and M1 and M2 are less than or equal to N.

30. The apparatus according to any one of claims 18 to 29, wherein the first beam related information and/or the second beam related information comprises at least one of the following:
beam quality related information;
beam ID related information;
beam angle related information;
beam gain related information; and
beam width related information.

31. The apparatus according to any one of claims 18 to 30, wherein the at least one beam group comprises a beam group used during first model verification on the target AI model, and/or a beam group used during the use of the target AI model.

32. The apparatus according to any one of claims 18 to 31, wherein the transmitting module is further configured to transmit second indication information to the second communication device, wherein the second indication information is used for indicating whether the target AI model is valid or invalid.

33. A model validity determination apparatus, comprising a receiving module, configured to perform any one of the following:
receiving at least one piece of second beam related information transmitted by a first communication device, and performing performance verification on a target AI model according to the at least one piece of second beam related information; and
receiving second indication information transmitted by the first communication device, wherein the second indication information is used for indicating whether the target AI model is valid or invalid.

34. The apparatus according to claim 33, wherein the second beam related information comprises at least one of the following:
beam quality related information;
beam ID related information;
beam angle related information;
beam gain related information; and
beam width related information.

35. A communication device, comprising a processor and a memory, wherein the memory stores programs or instructions executable on the processor, and when the programs or instructions are executed by the processor, steps of the model validity determination method according to any one of claims 1 to 15 are implemented, or steps of the model validity determination method according to any one of claims 16 to 17 are implemented.

36. A readable storage medium, storing programs or instructions, wherein when the programs or instructions are executed by a processor, steps of the model validity determination method according to any one of claims 1 to 15 are implemented, or steps of the model validity determination method according to any one of claims 16 to 17 are implemented.
